# EUROPEAN PATENT APPLICATION

(11) **EP 4 257 897 A1**
(43) Date of publication of application: **11.10.2023**
(21) Application number: 21917174.1
(22) Date of filing: 15.11.2021
(51) Int. Cl.: F25D 3/00

(54) **WATERWAY INTEGRATED DEVICE AND REFRIGERATOR HAVING SAME**

(30) Priority: 06.01.2021 CN 202110012905
(71) Applicant: Qingdao Haier Refrigerator Co., Ltd, Qingdao, Shandong 266101 (CN); Haier Smart Home Co., Ltd., Qingdao, Shandong 266101 (CN)
(72) Inventor: YANG, Jun, Qingdao, Shandong 266101 (CN); MOU, Guoliang, Qingdao, Shandong 266101 (CN); ZHANG, Fangyou, Qingdao, Shandong 266101 (CN)
(74) Representative: Gille Hrabal Partnerschaftsgesellschaft mbB Patentanwälte
(86) International application number: PCT/CN2021/130695
(87) International publication number: WO 2022/148133

(57) **Abstract**

A water-circuit integrated device is mounted in a cabinet of a refrigerator, and the water-circuit integrated device includes an integrated bracket as well as a filter, a water valve and a water bottle which are sequentially communicated, the integrated bracket includes a filter housing, a water valve housing and a fixing portion connected with each other, the filter housing accommodates the filter, the water valve housing accommodates the water valve, and the water bottle is connected to the fixing portion; the cabinet is provided therein with a plurality of drawers, the water-circuit integrated device is provided between two of the drawers arranged side by side, or arranged between one of the drawers and a side wall of the cabinet, and the fixing portion is fixedly connected with a side wall of the drawer or the side wall of the cabinet. In the water-circuit integrated device, the filter, the water valve and the water bottle are fixedly connected with the integrated bracket, and the fixing portion of the integrated bracket is fixedly connected with the side wall of the drawer or the side wall of the cabinet, such that the filter, the water valve and the water bottle are integrated together, a length of a water pipe is reduced, and a water circuit is convenient to reverse.

## Description

### TECHNICAL FIELD

The present invention relates to the field of refrigerator water supply, and in particular, to a water-circuit integrated device and a refrigerator having the same.

### BACKGROUND

Currently, in order to facilitate use of users, a plurality of refrigerator products are provided with dispensers, ice makers and other components, and the dispenser can dispense cold water and ice cubes. In order to supply water to the dispenser and the ice maker, a water supply system is generally provided in a refrigerator, and generally, the water supply system includes a filter, a water valve, a water bottle, or the like, and is configured to purify water supplied from an external water source and supply the purified water to the dispenser or the ice maker under control of the water valve.

In a traditional water supply system, the filter, the water valve and the water bottle are usually provided separately; for example, the filter and the water bottle are provided in a refrigerating chamber or on a door, and the water valve is provided in a compressor bin. Thus, repeated bent placement of water pipes, water circuit reversion and insertion are required to be performed in the refrigerator, which results in an increased length of water supply pipes and a complex structure.

### SUMMARY

An object of the present invention is to provide a water-circuit integrated device and a refrigerator having the same.

To achieve the above-mentioned object of the invention, an embodiment of the present invention provides wherein the water-circuit integrated device comprises an integrated bracket as well as a filter, a water valve and a water bottle which are sequentially communicated, the integrated bracket comprises a filter housing, a water valve housing and a fixing portion connected with each other, the filter housing accommodates the filter, the water valve housing accommodates the water valve, and the water bottle is connected to the fixing portion;
the cabinet is provided therein with a plurality of drawers, the water-circuit integrated device is provided between two of the drawers arranged side by side, or arranged between one of the drawers and a side wall of the cabinet, and the fixing portion is fixedly connected with a side wall of the drawer or the side wall of the cabinet.

As a further improvement to the present invention, wherein the filter comprises a connector and a filter cartridge detachably connected to the connector, an opening is provided in the filter housing, and the filter cartridge is inserted into the filter housing through the opening.

As a further improvement to the present invention, wherein a rear wall of the cabinet is provided with a through hole, the filter is connected with a water inlet pipe, and the water inlet pipe penetrates through the through hole and is connected with an external water source.

As a further improvement to the present invention, wherein the water valve further comprises a wiring terminal, an electrical signal connector is provided at a position on the rear wall of the cabinet corresponding to the wiring terminal, and the wiring terminal is electrically connected with the electrical signal connector.

As a further improvement to the present invention, wherein a slide rail side plate is provided on one side of the drawer, a fixed slide rail is provided on a side of the slide rail side plate close to the drawer, a movable slide rail fitted with the fixed slide rail is provided on the side wall of the drawer, and the integrated bracket is fixedly connected to a side of the slide rail side plate apart from the drawer.

As a further improvement to the present invention, wherein the water valve is selectively communicated with the water bottle through a water-bottle water inlet assembly; the water-bottle water inlet assembly comprises a water inlet sleeve and a water inlet insertion part rotatably inserted into the water inlet sleeve, and water inlet flow channels which can be mutually communicated are provided in the water inlet insertion part and the water inlet sleeve.

As a further improvement to the present invention, wherein the water inlet sleeve extends outwards from a water inlet of the water bottle, and the water inlet sleeve and the water bottle are integrally formed; the water inlet insertion part extends outwards from a water outlet of the water valve, and the water inlet insertion part and the water valve are integrally formed.

As a further improvement to the present invention, wherein the filter housing, the water valve housing, and the fixing portion are integrally formed.

As a further improvement to the present invention, wherein the filter, the water valve and the water bottle are adjacent to each other, and the filter and the water bottle are provided at an angle.

The invention on the other hand also discloses a refrigerator, said refrigerator comprising a freezer compartment, said freezer compartment being provided with water-circuit integrated structure as described above.

Compared with a prior art, in the water-circuit integrated device according to the present invention, the filter, the water valve and the water bottle are fixedly connected with the integrated bracket, and the fixing portion of the integrated bracket is fixedly connected with the side wall of the drawer or the side wall of the cabinet, such that the filter, the water valve and the water bottle are integrated together, a length of a water pipe is reduced, and a water circuit is convenient to reverse.

### BRIEF DESCRIPTION OF THE DRAWINGS

FIG. 1 is a schematic structural diagram of a water-circuit integrated device according to an embodiment of the present invention;
FIG. 2 is a schematic structural diagram of a water-circuit integrated device according to an embodiment of the present invention;
FIG. 3 is a schematic structural diagram of a water-circuit integrated device according to an embodiment of the present invention;
FIG. 4 is a schematic enlarged diagram of part A of FIG. 3;
FIG. 5 is a schematic sectional diagram of a water-bottle water inlet assembly in an embodiment of the present invention;
FIG. 6 is a schematic structural diagram of a cabinet in an embodiment of the present invention;
FIG. 7 is a schematic structural diagram of a cabinet in an embodiment of the present invention; and
FIG. 8 is a schematic structural diagram of a water-circuit integrated device according to an embodiment of the present invention.

### DETAILED DESCRIPTION

Hereinafter, the present invention will be described in detail in conjunction with specific embodiments shown in the accompanying drawings. However, these embodiments have no limitations on the present invention, and any transformations of structure, method, or function made by persons skilled in the art according to these embodiments fall within the protection scope of the present invention.

It should be understood that the terms expressive of spatial relative positions, such as "upper", "above", "lower", "below", or the like herein are used to describe the relationship of a unit or feature relative to another unit or feature in the drawings, for the purpose of illustration and description. Terms expressive of the spatial relative positions are intended to include different orientations of the device in use or operation other than the orientations shown in the drawings.

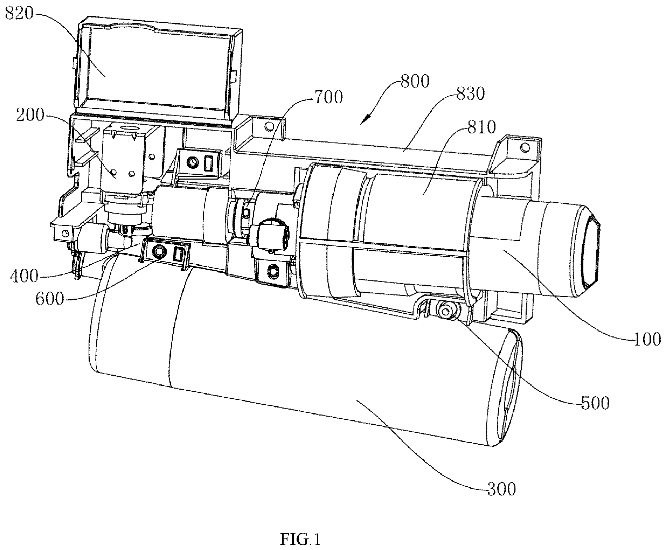

As shown in FIGS. 1 to 8, an embodiment of the present invention discloses a water-circuit integrated structure and a refrigerator. The water-circuit integrated structure includes a filter 100, a water valve 200 and a water bottle 300 communicated in sequence, the water bottle 300 includes a proximal end 310 and a distal end 320 arranged oppositely in a length direction, the proximal end 310 of the water bottle 300 is detachably connected with the water valve 200 by a water-bottle water inlet assembly 400, and the distal end 310 of the water bottle 300 is detachably connected with the filter 100 by a distal-end snapping assembly 500. The water-bottle water inlet assembly 400 includes a rotation axis perpendicular to the length direction of the water bottle 300. During snapped connection of the distal-end snapping assembly 500, the water-bottle water inlet assembly 400 realizes locked connection in an axial direction of the rotation axis. When the water-bottle water inlet assembly 400 is released in the axial direction of the rotation axis, the distal-end snapping assembly 500 is released from the snapped connection.

In the water-circuit integrated structure according to the present invention, one end of the water bottle 300 is detachably connected with the water valve 200 by the water-bottle water inlet assembly 400, and the other end of the water bottle is detachably connected with the filter 100 by the distal-end snapping assembly 500, such that during snapped connection of the distal-end snapping assembly 500, the water-bottle water inlet assembly 400 also realizes locked connection, and the water bottle 300, the water valve 200 and the filter 100 can be connected together. When the water-bottle water inlet assembly 400 is released, the distal-end snapping assembly 500 is just released from the snapped connection, such that the water bottle 300 can be smoothly detached from the water valve 200 and the filter 100. Therefore, the water bottle 300 can be conveniently connected with or detached from the water valve 200 and the filter 100 by fitting of the water-bottle water inlet assembly 400 and the distal-end snapping assembly 500, such that the water bottle 300 can be conveniently replaced or repaired subsequently.

Further, when the distal-end snapping assembly 500 is released from the snapped connection, the water-bottle water inlet assembly 400 is released in the axial direction of the rotation axis. That is, when the distal-end snapping assembly 500 is released from the snapped connection, the water-bottle water inlet assembly 400 is also released in the axial direction of the rotation axis, and at this point, the water bottle 300 can be detached from the water valve 200 and the filter 100. Thus, state transitions of the water-bottle water inlet assembly 400 and the distal-end snapping assembly 500 are completely consistent, such that a stroke of a rotation operation can be shortened, and an operation of mounting or dismounting the water bottle 300 is simpler and more convenient.

In the embodiment of the present invention, during snapped connection of the distal-end snapping assembly 500, a direction of the locked connection of the water-bottle water inlet assembly 400 is different from a direction of the snapped connection of the distal-end snapping assembly 500. That is, the water-bottle water inlet assembly 400 and the distal-end snapping assembly 500 are connected with the water bottle in different directions, thereby further reinforcing the connection of the water bottle 300 with the water valve 200 and the filter 100; the connection in the two different directions does not interfere, such that the water bottle 300 is not easily released and dropped even when the assembly in one direction fails.

Still further, during snapped connection of the distal-end snapping assembly 500, the direction of the locked connection of the water-bottle water inlet assembly 400 is the axial direction of the rotation axis, and the direction of the snapped connection of the distal-end snapping assembly 500 is perpendicular to the axial direction of the rotation axis. That is, directions of the connection of the water-bottle water inlet assembly 400 and the distal-end snapping assembly 500 to the water bottle are perpendicular to each other. Mutual interference of the connection in the two directions can be reduced to the minimum, such that the connection of the water bottle is firmer.

In the embodiment of the present invention, the distal-end snapping assembly 500 includes a distal-end snapping portion and a distal-end fitting portion which can be snapped to or separated from the distal-end snapping portion, the distal-end snapping portion is provided on one of the water bottle 300 and the filter 100, and the distal-end fitting portion is provided on the other of the water bottle 300 and the filter 100. The snapping or separating operation can be easily realized by mutual fitting of the distal-end snapping portion and the distal-end fitting portion. In the present embodiment, the distal-end snapping portion is provided on the filter 100, and the distal-end fitting portion is provided on the water bottle 300.

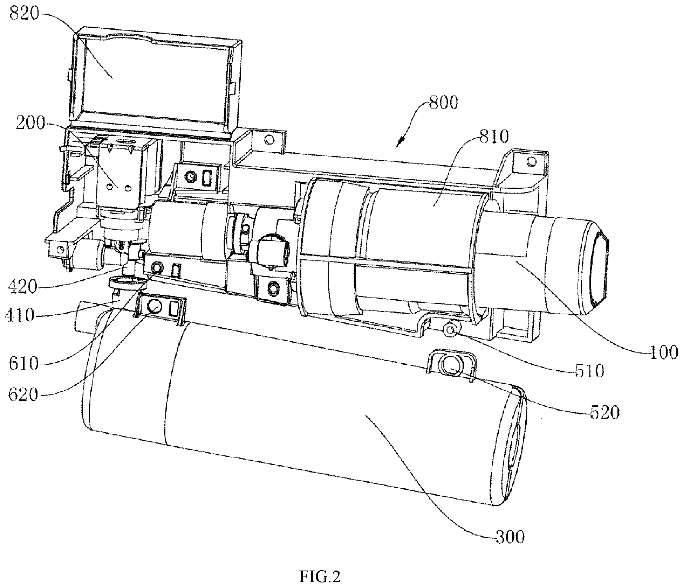

Further, as shown in FIG. 2, the distal-end snapping portion is configured as a distal-end hanging buckle 510 provided on the filter 100, the distal-end fitting portion is configured as a distal-end hanging hole 520 provided on the water bottle 300, and during the snapped connection of the distal-end snapping assembly 500, the distal-end hanging buckle 510 is inserted into the distal-end hanging hole 520. The connection by the hanging buckle and the hanging hole has a simple structure and a low cost, and is easy to operate. Specifically, the snapped connection of the distal-end snapping assembly 500 may be realized directly by inserting the distal-end hanging buckle 510 into the distal-end hanging hole 520. When the connection of the distal-end snapping assembly 500 is desired to be reinforced, a thread may be provided in the distal-end hanging buckle 510, and when the distal-end hanging buckle 510 is inserted into the distal-end hanging hole 520, a screw is screwed into and in threaded connection with the distal-end hanging buckle 510, and an end surface of the screw abuts against an edge of the hanging hole 520. In other embodiments, the distal-end hanging buckle may also be in interference fit with the distal-end hanging hole. Therefore, in a transportation/assembly process of the water-circuit integrated structure or a refrigerator, even when conditions of collision or shaking, or the like, are generated, the distal end of the water bottle cannot be easily disconnected. Also, the distal-end hanging buckle 510 may extend outwards from a housing of the filter 100, the distal-end hanging buckle 510 and the housing of the filter 100 may be integrally formed, the distal-end hanging hole 520 may extend outwards from the water bottle 300, and the distal-end hanging hole 520 and the water bottle 300 may be integrally formed. The arrangement of the integrally formed structure makes the connection between the water bottle 300 and the filter 100 more stable and firmer.

In other embodiments, the distal-end snapping portion and the distal-end fitting portion may be of other structures in snapped connection.

Preferably, the proximal end 310 of the water bottle 300 is also detachably connected with the filter 100 by a proximal-end snapping assembly 600. During snapped connection of the distal-end snapping assembly 500, the proximal-end snapping assembly 600 realizes snapped connection. When the water-bottle water inlet assembly 500 is released in the axial direction of the rotation axis, the proximal-end snapping assembly 600 is released from the snapped connection. The proximal-end snapping assembly 600 is provided at the proximal end 310 of the water bottle 300, thereby further strengthening the connection at the proximal end 310 of the water bottle 300. Furthermore, the proximal-end snapping assembly 600 can also be fitted with the water-bottle water inlet assembly 400 and the distal-end snapping assembly 500 to realize synchronous connection or detachment. Specifically, the proximal-end snapping assembly 600 also includes a proximal-end snapping portion 610 and a proximal-end fitting portion 620 which can be snapped to or separated from the proximal-end snapping portion 610, and in the embodiment of the present invention, the proximal-end snapping portion is configured as a proximal-end hanging buckle 610, and the proximal-end fitting portion is configured as a proximal-end hanging hole 620.

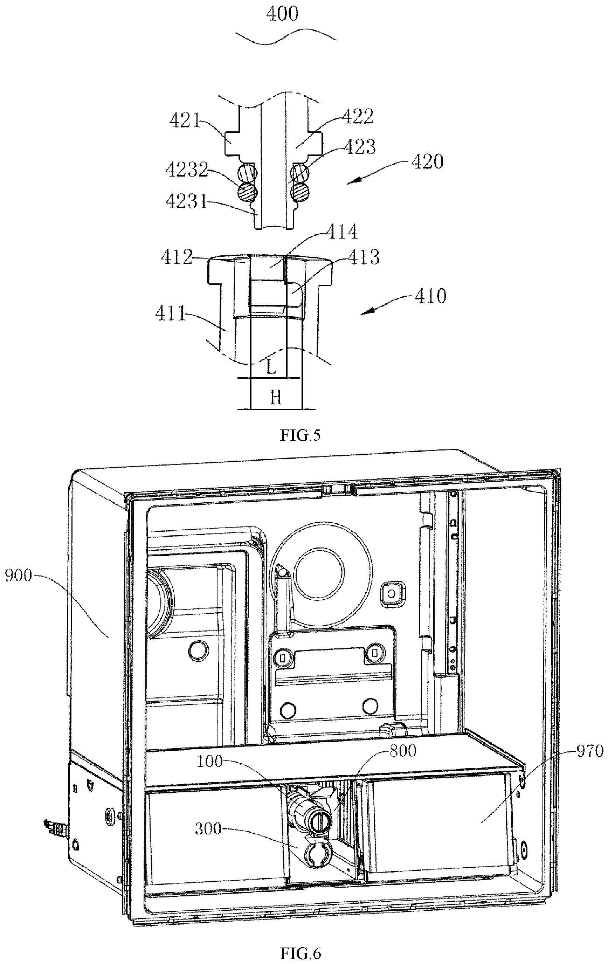

In the embodiment of the present invention, the water bottle 300 and the water valve 200 are also selectively communicated by the water-bottle water inlet assembly 400, and the water-bottle water inlet assembly 400 includes: a water inlet sleeve 410 and a water inlet insertion part 420 rotatably inserted into the water inlet sleeve 410. The water inlet insertion part 420 and the water inlet sleeve 410 are provided therein with water inlet flow channels which can be communicated with each other. The water inlet sleeve 410 is provided on one of the water bottle 300 and the water valve 200, and the water inlet insertion part 420 is provided on the other of the water bottle 300 and the water valve 200. The water inlet insertion part 420 is provided with a water inlet limiting protrusion 421, and the water inlet sleeve 410 includes a water inlet cylinder 411, a water inlet insertion port 412 formed on the water inlet cylinder 411 and a water inlet limiting hole 413 provided in a circumferential direction of the water inlet cylinder 411. The water inlet sleeve 410 is further provided with a water inlet guide groove 414 matched with the water inlet limiting protrusion 421, and the water inlet guide groove 414 extends axially from the water inlet insertion port 412 along the water inlet sleeve 410 and is communicated with an end portion of the water inlet limiting hole 413. As shown in FIG. 5, in the circumferential direction of the water inlet cylinder 411, a dimension H of the water inlet limiting hole 413 is greater than a dimension L of the water inlet guide groove 414. That is, the water-bottle water inlet assembly 400 not only serves to connect the water bottle 300 and the water valve 200, but also serves to allow water to pass therethrough, that is, allow water in the water valve 200 to flow into the water bottle 300, after the connection. In the embodiment of the present invention, external water firstly flows into the filter 100, and then flows into the water valve 200 from the filter 100, the water valve 200 has two water outlets, one of the two water outlets extends outwards to form the water inlet insertion part 420, and an inlet of the water bottle 300 extends outwards to form the water inlet sleeve 410, such that the water can flow through the water inlet insertion part 420 and the water inlet sleeve 410 after the water inlet insertion part 420 and the water inlet sleeve 410 are connected.

In addition, in the circumferential direction of the water inlet cylinder 411, the dimension H of the water inlet limiting hole 413 is set to be greater than the dimension L of the water inlet guide groove 414, such that when the water inlet insertion part 420 is inserted into the water inlet sleeve 410, the water inlet limiting protrusion 421 on the water inlet insertion part 420 can enter the water inlet guide groove 414 from the water inlet insertion port 412 on the water inlet sleeve 410, and then, the water bottle 300 is rotated along the rotation axis in a first direction, and the water inlet limiting protrusion 421 can enter the water inlet limiting hole 413; since the dimension H of the water inlet limiting hole 413 is larger and the water inlet limiting hole 413 is not communicated with the water inlet insertion port 412, at this point, the water inlet limiting protrusion 421 and the water inlet limiting hole 413 are in snap fit, such that even when a force is applied in a direction opposite to an insertion direction, the water inlet insertion part 420 cannot reversely exit from the water inlet sleeve 410, thereby locking the water-bottle water inlet assembly 400. Then, the water bottle 300 is rotated along the rotation axis in a direction opposite to the first direction, such that the water inlet limiting protrusion 421 is aligned with the water inlet guide groove 414, thereby releasing the water-bottle water inlet assembly 400 in the axial direction of the rotation axis. At this point, the water inlet limiting protrusion 421 can move towards the water inlet insertion port 412 along the water inlet guide groove 414 by applying a force in the direction opposite to the insertion direction, and finally, the water inlet insertion part 420 reversely exits from the water inlet sleeve 410.

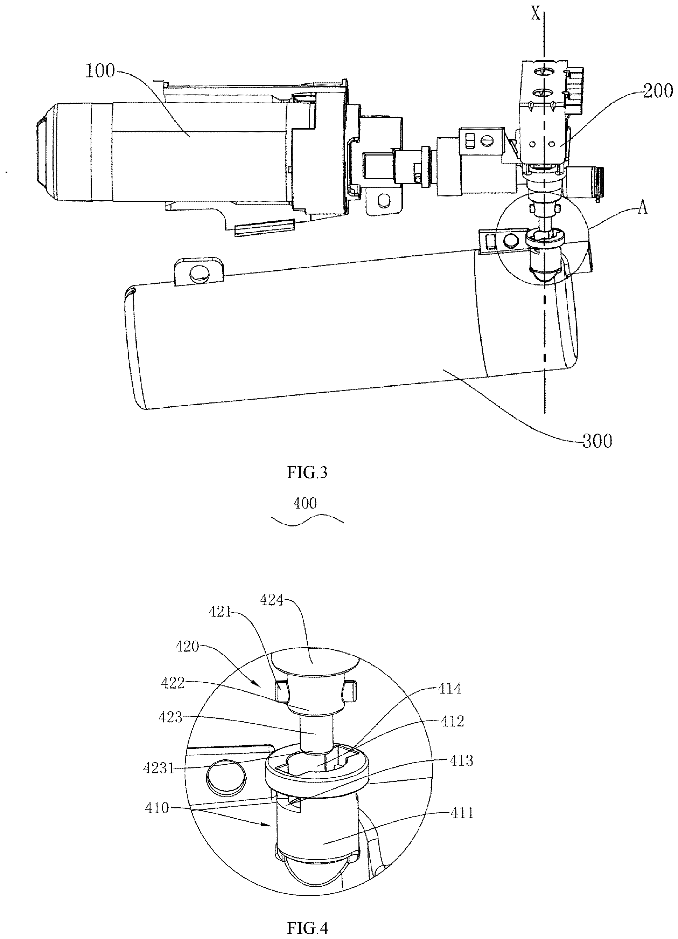

Specifically, as shown in FIG. 3, the rotation axis is configured as a central axis X of the water inlet sleeve 410. That is, by rotating the water bottle 300 about the central axis X of the water inlet sleeve 410, the water-bottle water inlet assembly 400 can be locked or released, and the distal-end snapping assembly 500 can realize snapped connection or be released from the snapped connection. Thus, the connection and detachment of the water bottle 300 are simple, and an operation of a user is convenient.

Further, the water inlet sleeve 410 extends outwards from a water inlet of the water bottle 300, and the water inlet sleeve 410 and the water bottle 300 are integrally formed. The water inlet insertion part 420 extends outwards from a water outlet of the water valve 200, and the water inlet insertion part 420 and the water valve 200 are integrally formed. That is, no water pipe is provided between the water bottle 300 and the water valve 200, and the water bottle 300 and the water valve 200 are directly connected through the water-bottle water inlet assembly 400 extending from the respective components of the water bottle 300 and the water valve 200, such that the connection is more stable, and a problem that the water pipe is bent to be damaged and difficult to repair, and a risk of water leakage are avoided.

Preferably, the water inlet insertion part 420 includes a first insertion portion 422 and a second insertion portion 423 provided at a front end of the first insertion portion 422, and an outer diameter of the second insertion portion 423 is less than an outer diameter of the first insertion portion 422. When the water inlet insertion part 420 is inserted into the water inlet sleeve 410, the second insertion portion 423 having a less inner diameter is inserted into the water inlet sleeve 410 first, such that a guiding function can be provided for an insertion action, and the connection of the water-bottle water inlet assembly 400 is easier.

In the embodiment of the present invention, the second insertion portion 423 is sleeved with a sealing part The sealing part 4231 is configured to fill a gap between an outer wall of the second insertion portion 423 and an inner wall of the water inlet sleeve 410, thereby preventing water leakage. Specifically, an inner diameter at a position of the water inlet sleeve 410 corresponding to the sealing part 4231 on the second insertion portion 423 is reduced, such that the sealing part 4231 is pressed between the inner wall of the water inlet sleeve 410 and the second insertion portion 423 to further enhance a sealing effect.

Further, the water inlet insertion part 420 further includes a stopper 424 connected with the first insertion portion 421, and an end surface of the stopper 424 abuts against an end surface of the water inlet sleeve 410. The stopper 424 serves as a terminal point of insertion of the water inlet insertion part 420 into the water inlet sleeve 410; that is, when the water inlet insertion part is inserted into the water inlet sleeve 410, and the end surface of the stopper 424 is seen to abut against the end surface of the water inlet sleeve 410, the insertion action can be determined to be in place.

As shown in FIG. 4, the water inlet insertion part 420 is provided with two water inlet limiting protrusions 421, the two water inlet limiting protrusions 421 are symmetrically arranged relative to an axis of the water inlet insertion part 420, and two water inlet guide grooves 413 are arranged at positions on the water inlet sleeve corresponding to the two water inlet limiting protrusions 421. The two symmetrical water inlet limiting protrusions 421 and the two corresponding water inlet guide grooves 413 are arranged, such that the water inlet insertion part 420 and the water inlet sleeve 410 can be locked more firmly and stably.

Preferably, the filter 100 and the water valve 200 are selectively communicated through a filter water outlet assembly 700. The filter water outlet assembly 700 includes: a water outlet sleeve 710 and a water outlet insertion part 720 rotatably inserted into the water outlet sleeve 710. The filter water outlet assembly 700, the water outlet sleeve 710 and the water outlet insertion part 720 have identical structures to and different positions from the water-bottle water inlet assembly 400, the water inlet sleeve 410 and the water inlet insertion part 420. Therefore, the detailed structure of the filter water outlet assembly 700 is not repeated.

Further, the filter 100, the water valve 200 and the water bottle 300 are adjacently arranged two by two, and the water-bottle water inlet assembly 400 is perpendicular to the filter water outlet assembly 700. That is, the central axis X of the water outlet sleeve 710 is perpendicular to the central axis of the water inlet sleeve 410.

As shown in FIG. 1, the water-circuit integrated structure further includes a housing 800, and the housing 800 encloses the filter 100 and the water valve 200. Specifically, the housing 800 also functions to connect the water-circuit integrated structure to the refrigerator. In addition, the distal-end hanging buckle 510 is also provided on the housing 800, such that the connection of the water bottle 300 is more stable.

As shown in FIGS. 6 to 7, the water-circuit integrated device according to the embodiment of the present invention is mounted in a cabinet 900 of the refrigerator, and may be specifically mounted in a refrigerating chamber of the refrigerator. The integrated bracket 800 includes a filter housing 810, a water valve housing 820 and a fixing portion 830 connected with each other, the filter housing 810 accommodates the filter 100, the water valve housing 820 accommodates the water valve 200, and the water bottle 300 is connected with the fixing portion 830. The cabinet is provided therein with a plurality of drawers 970, the water-circuit integrated device is provided between two of the drawers 970 arranged side by side, or arranged between one of the drawers 970 and a side wall of the cabinet 900, and the fixing portion 830 is fixedly connected with a side wall of the drawer 970 or the side wall of the cabinet 900.

In the water-circuit integrated device according to the present invention, the filter 100, the water valve 200 and the water bottle 300 are fixedly connected with the integrated bracket 800, and the fixing portion 830 of the integrated bracket 800 is fixedly connected with the side wall of the drawer 970 or the side wall of the cabinet 900, such that the filter 100, the water valve 200 and the water bottle 300 are integrated together, a length of a water pipe is reduced, and a water circuit is convenient to reverse.

In the embodiment of the invention, the water-circuit integrated device is provided between two drawers 970, and the fixing portion 830 of the integrated bracket 100 is fixedly connected with the side wall of the drawer 970.

In the embodiment of the present invention, the filter 100 includes a connector 110 and a filter cartridge 120 detachably connected to the connector 110, an opening 811 is provided in the filter housing 810, and the filter cartridge 120 is inserted into the filter housing 810 through the opening 811. As a usage time increases, a filtering effect of a filter media in the filter cartridge 120 gradually decreases, and therefore, the filter cartridge 120 is required to be replaced periodically. The filter cartridge 120 can be conveniently replaced by detachably connecting the filter cartridge 120 to the connector. In addition, the filter housing 810 can support the filter cartridge 120, such that connection between the filter cartridge 120 and the connector 110 is more stable.

Further, a rear wall of the cabinet 900 is provided with a through hole 910, the filter 100 is connected with a water inlet pipe 920, and the water inlet pipe 920 penetrates through the through hole 910 and is connected with an external water source. The external water source is connected with one end of the water inlet pipe 920, and the water inlet tube 920 is inserted into the cabinet 900 through the through hole 910 of the cabinet 900 and then connected with the water-circuit integrated device, such that a connection mode is simple, a number of water pipes outside the cabinet is small, no messy water pipes exist outside the refrigerator, and therefore, an appearance is attractive.

Preferably, the water valve 200 further includes a wiring terminal 210, an electrical signal connector is provided at a position on the rear wall of the cabinet 900 corresponding to the wiring terminal 210, and the wiring terminal 210 is electrically connected with the electrical signal connector. In the embodiment of the present invention, the water valve 200 is configured as an electromagnetic valve, and therefore is required to be connected with a power source. A groove is formed at a position on the rear wall of the cabinet 900 corresponding to the wiring terminal 210 of the water valve 200, and the electrical signal connector is provided in the groove, such that after the water-circuit integrated device is mounted in the cabinet 900, the wiring terminal 210 can be aligned with the electrical signal connector and connected with the electrical signal connector. The electric signal connector is connected to an electric wire and the power source to supply power to the electromagnetic water valve.

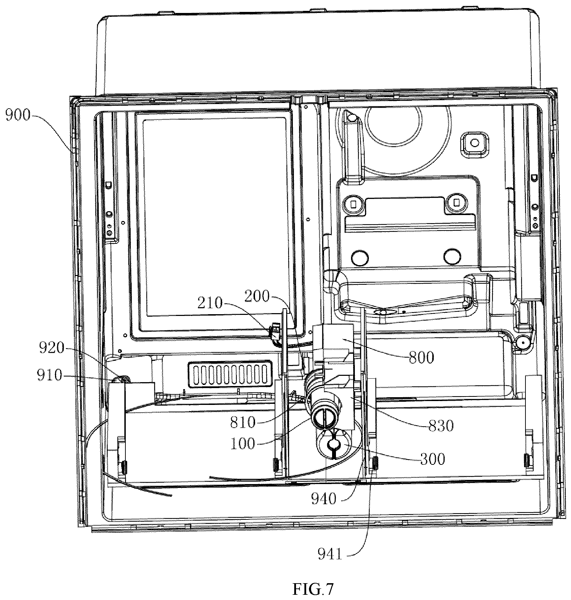

In the embodiment of the present invention, a slide rail side plate 940 is provided on one side of the drawer 970, a fixed slide rail 941 is provided on a side of the slide rail side plate 940 close to the drawer, a movable slide rail fitted with the fixed slide rail 941 is provided on the side wall of the drawer, and the integrated bracket is fixedly connected to a side of the slide rail side plate 940 apart from the drawer. As shown in FIG. 7, a side of each of two drawers 970 apart from the side wall of the cabinet 900 is provided with a slide rail side plate 940, the slide rail side plate 940 is provided with a fixed slide rail 941, and the side wall of the drawer 970 is provided with a movable slide rail, such that the movable slide rail of the drawer 970 can be fitted with the fixed slide rail 941 for sliding, so as to pull or push the drawer 970 from or into the cabinet 900. The fixing portion 830 is connected to one of the slide rail side plates 940, such that the whole water-circuit integrated device has a fixed position, cannot swing left and right, and has good stability. Specifically, the fixing portion 830 is connected to the slide rail side plate 940 by a screw. In other embodiments, the fixing portion 830 can also be connected to the slide rail side plate by other means, such as snapping.

Preferably, the filter housing 810, the water valve housing 820 and the fixing portion 830 are integrally formed. Similarly, the filter housing 810, the water valve housing 820 and the fixing portion 830 are integrally formed to form the integrated bracket, such that the integrated bracket has a more stable structure; when the water-circuit integrated device is assembled, the filter 100, the water valve 200 and the water bottle 300 are connected with the integrated bracket 100, such that a connection mode is simple.

As shown in FIG. 1, the filter 100, the water valve 200 and the water bottle 300 are adjacent to each other, and the filter 100 and the water bottle 300 are provided at an angle. Since bubbles may be generated in the water bottle 300, and have different sizes, a burst may corrode or damage metal components of the water bottle 300, and a water hammer effect may be generated. In the embodiment of the present invention, the water bottle 300 and the filter 100 are arranged at an angle of 5 degrees, thus ensuring that the bubbles in the water bottle 300 flow out of a water storage space in the water bottle 300, reducing the water hammer effect, and reducing a probability of corrosion or damage to the water bottle 300.

An embodiment of the present invention further discloses a refrigerator including a cabinet, wherein the cabinet includes a refrigerating chamber, and the refrigerating chamber is provided therein with the water-circuit integrated device as mentioned above.

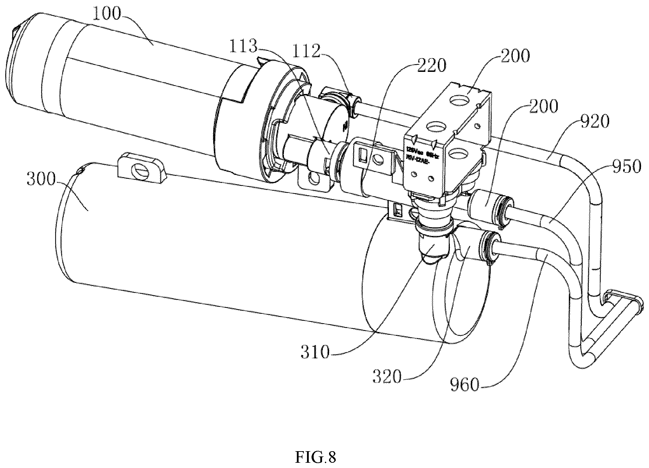

Specifically, as shown in FIG. 8, the refrigerator includes a dispenser and an ice maker, the ice maker is connected with an ice maker water supply pipe 950, the dispenser is connected with a dispenser water supply pipe 960, the connector 110 is provided with a filter water inlet 112 and a filter water outlet 113, the water bottle 300 includes a water bottle water inlet 141 and a water bottle water outlet 142, and the water valve 200 includes a water valve water inlet 210, a first water outlet 220, and a second water outlet 230. The filter water inlet 112 is connected with a water inlet pipe 920 for supplying water, the filter water outlet 113 is connected with the water valve water inlet 210, and the water valve selectively supplies water to the first water outlet 220 or the second water outlet 230.

The first water outlet 220 is connected with the ice maker water supply pipe 950, the second water outlet 230 is connected with the water bottle water inlet 141, and the water bottle water outlet 142 is connected with the dispenser water supply pipe 960. Therefore, the external water can be supplied to the ice maker and the dispenser through the water-circuit integrated device.

In the water-circuit integrated device according to the present invention, the filter, the water valve and the water bottle are fixedly connected with the integrated bracket, and the fixing portion of the integrated bracket is fixedly connected with the side wall of the drawer or the side wall of the cabinet, such that the filter, the water valve and the water bottle are integrated together, the length of the water pipe is reduced, and the water circuit is convenient to reverse. The fixing portion of the water-circuit integrated bracket is connected to one of the slide rail side plates fitted with the drawer, such that the whole water-circuit integrated device has a fixed position, cannot swing left and right, and has good stability. No water pipe is provided between the water bottle and the water valve, and the water bottle and the water valve are directly connected through the water-bottle water inlet assembly extending from the respective components of the water bottle and the water valve, such that the connection is more stable, and the problem that the water pipe is bent to be damaged and difficult to repair, and the risk of water leakage are avoided. The filter housing, the water valve housing and the fixing portion are integrally formed to form the integrated bracket, such that the integrated bracket has a more stable structure. The water bottle and the filter are arranged at an angle of 5 degrees, thus ensuring that the bubbles in the water bottle flow out of a water storage space in the water bottle, reducing the water hammer effect, and reducing a probability of corrosion or damage to the water bottle.

It should be understood that although the present specification is described based on embodiments, not every embodiment contains only one independent technical solution. Such a narration way of the present specification is only for the sake of clarity. Those skilled in the art should take the present specification as an entirety. The technical solutions in the respective embodiments may be combined properly to form other embodiments which may be understood by those skilled in the art.

A series of the detailed descriptions set forth above is merely specific description of feasible embodiments of the present invention, and is not intended to limit the protection scope of the present invention. Equivalent embodiments or modifications made within the spirit of the present invention shall fall within the protection scope of the present invention.

## Claims

1. A water-circuit integrated device mounted in a cabinet of a refrigerator,
wherein the water-circuit integrated device comprises an integrated bracket as well as a filter, a water valve and a water bottle which are sequentially communicated, the integrated bracket comprises a filter housing, a water valve housing and a fixing portion connected with each other, the filter housing accommodates the filter, the water valve housing accommodates the water valve, and the water bottle is connected to the fixing portion;
the cabinet is provided therein with a plurality of drawers, the water-circuit integrated device is provided between two of the drawers arranged side by side, or arranged between one of the drawers and a side wall of the cabinet, and the fixing portion is fixedly connected with a side wall of the drawer or the side wall of the cabinet.

2. The water-circuit integrated device according to claim 1, wherein the filter comprises a connector and a filter cartridge detachably connected to the connector, an opening is provided in the filter housing, and the filter cartridge is inserted into the filter housing through the opening.

3. The water-circuit integrated device according to claim 1, wherein a rear wall of the cabinet is provided with a through hole, the filter is connected with a water inlet pipe, and the water inlet pipe penetrates through the through hole and is connected with an external water source.

4. The water-circuit integrated device according to claim 1, wherein the water valve further comprises a wiring terminal, an electrical signal connector is provided at a position on the rear wall of the cabinet corresponding to the wiring terminal, and the wiring terminal is electrically connected with the electrical signal connector.

5. The water-circuit integrated device according to claim 1, wherein a slide rail side plate is provided on one side of the drawer, a fixed slide rail is provided on a side of the slide rail side plate close to the drawer, a movable slide rail fitted with the fixed slide rail is provided on the side wall of the drawer, and the integrated bracket is fixedly connected to a side of the slide rail side plate apart from the drawer.

6. The water-circuit integrated device according to claim 1, wherein the water valve is selectively communicated with the water bottle through a water-bottle water inlet assembly; the water-bottle water inlet assembly comprises a water inlet sleeve and a water inlet insertion part rotatably inserted into the water inlet sleeve, and water inlet flow channels which can be mutually communicated are provided in the water inlet insertion part and the water inlet sleeve.

7. The water-circuit integrated device according to claim 6, wherein the water inlet sleeve extends outwards from a water inlet of the water bottle, and the water inlet sleeve and the water bottle are integrally formed; the water inlet insertion part extends outwards from a water outlet of the water valve, and the water inlet insertion part and the water valve are integrally formed.

8. The water-circuit integrated device according to claim 1, wherein the filter housing, the water valve housing, and the fixing portion are integrally formed.

9. The water-circuit integrated device according to claim 1, wherein the filter, the water valve and the water bottle are adjacent to each other, and the filter and the water bottle are provided at an angle.

10. A refrigerator, comprising a cabinet, wherein the cabinet comprises a refrigerating chamber, and the water-circuit integrated device according to any one of claims 1 to 9 is mounted in the refrigerating chamber.
